# EUROPÄISCHE PATENTSCHRIFT

(11) **EP 0 892 920 B1**
(45) Veröffentlichungstag und Bekanntmachung des Hinweises auf die Patenterteilung: **01.12.1999**
(21) Anmeldenummer: 97921614.0
(22) Anmeldetag: 11.04.1997
(51) Int. Cl.: G01N 3/12

(54) **VERFAHREN UND VORRICHTUNG ZUM PRÜFEN EINES HOHLKÖRPERABSCHNITTES**
PROCESS AND DEVICE FOR CHECKING A HOLLOW BODY SECTION
PROCEDE ET DISPOSITIF D'INSPECTION D'UNE SECTION D'UN CORPS CREUX

(30) Priorität: 11.04.1996 DE 19616137
(43) Veröffentlichungstag der Anmeldung: 27.01.1999
(73) Patentinhaber: MANNESMANN Aktiengesellschaft, 40213 Düsseldorf (DE)
(72) Erfinder: JUNKER, Gerd,Dipl.-Ing., D-40883 Ratingen (DE); KNAUF, Gerhard,Dr., D-47249 Duisburg (DE); CLAUS, Ronald,Dr., D-59514 Welver (DE)
(74) Vertreter: Meissner, Peter E., Dipl.-Ing.
(86) Internationale Anmeldenummer: DE9700765
(87) Internationale Veröffentlichungsnummer: WO9738296

(56) Entgegenhaltungen:
- DE-A- 2 700 600
- DE-A- 3 338 128
- DE-A- 3 504 685
- DE-A- 3 736 014
- DE-A- 3 827 080
- PATENT ABSTRACTS OF JAPAN vol. 008, no. 001 (P-246), 6.Januar 1984 & JP 58 167937 A (HITACHI SEISAKUSHO KK), 4.Oktober 1983, in der Anmeldung erwähnt

## Beschreibung

Die Erfindung betrifft ein Verfahren zum Prüfen eines Hohlkörperabschnittes gemäß dem Gattungsbegriff des Hauptanspruches.

Hohlkörperabschnitte werden zum Nachweis ausreichender Sprödbruchsicherheit und / oder zur Überprüfung der Werkstoffeigenschaften einem Berstversuch unterworfen. Dazu werden die beiden offenen Enden mit Böden verschlossen und mit einem Füll- und Entleerungsanschluß versehen. Nach Füllung des Innenraumes mit einem Fluid wird mittels einer Pumpe der Druck solange erhöht, bis Bersten eintritt. Danach wird die Umfangsdehnung, die Bruchflächenausbildung und, wenn erforderlich, der Berstdruck bewertet. Für eine Serienprüfung von Hohlkörperabschnitten z. B. Airbagrohren ist die Verfahrensweise sehr aufwendig und beansprucht viel Zeit. Außerdem kann mit diesem konventionellen Verfahren eine dynamische Innendruckbelastung nicht simuliert werden.

Aus der JP 58-167937 (A) in: Pat. Abstr. of Japan, Sect. P, Vol. 8 (1984) Nr. 1 (P-246) ist ein Verfahren zur Druckprüfung eines Hohlkörperabschnittes bekannt. Das eine stirnseitige Ende des Prüflings steht auf einem Widerlager und in das gegenüberliegende offene Ende greift ein Kolben eines Hydraulikzylinders ein. Der Hohlraum des Prüflings ist mit Weichgummi gefüllt und oben und unten ist je ein kolbenähnlicher aus Hartgummi hergestellter Dichtring angeordnet, der verhindert, daß unter Druck das Weichgummi im Spalt zwischen der Innenoberfläche des Prüflings und des Kolbens des Hydraulikzylinders wegfließen kann. Durch Aufgabe von Druck auf die Kolben-Zylindereinheit wird eine Axialkraft auf das Weichgummi erzeugt. Diese Axialkraft erzeugt einen Innendruck im Prüfling, der solange gesteigert wird, bis plastisches Fließen eintritt. Die sich daraus ergebenden Werkstoffkennwerte werden ermittelt. Mit dieser Anordnung ist eine dynamische Bauteilprüfung nicht möglich, da das Weichgummi eine hohe Kompressibilität und Viskosität im Vergleich zu einer Flüssigkeit aufweist. Darüber hinaus können mit einer hydraulisch wirkenden Kolben-Zylindereinheit keine hohen Belastungsgeschwindigkeiten erzeugt werden. Von weiterem Nachteil ist, daß bei niedrigen Prüftemperaturen das Weichgummi spröde wird.

In der DE 3504685 C2 ist ein Verfahren und eine Vorrichtung zur Innendruckprüfung von Rohren, insbesondere von Geschützrohren offenbart. Das zu prüfende Geschützrohr wird an beiden Enden in eine drehbankähnliche Prüfvorrichtung abdichtend eingespannt. In den Hohlraum des Geschützrohres wird ein zylindrisches Füllstück und im Abstand dazu ein Dorn eingeschoben. Da der Außendurchmesser des Dornes etwas geringer ist als der Innendurchmesser des Geschützrohres ergibt sich ein durchgehender Ringspalt. Der durch das linke Endstück hindurchgreifende Dorn wird durch eine entsprechende Hydraulikvorrichtung schlagartig in Richtung Geschützrohr bewegt, so daß in der zwischen Füllstück und Dorn eingeschlossenen Flüssigkeit ein Druck von bis zu 80.000 bar aufgebaut wird. Über den Ringspalt wird dieser Druck entlang des Geschützrohres bis zu dem vorher aufgebrachten Vordruck von etwa 200 bar abgebaut. Mit diesem Verfahren können Geschützrohre entsprechend der späteren Belastung einer gezielten Druckprüfung unterzogen werden. Es ist kein Berstversuch zur Ermittlung der Zähigkeitseigenschaften von Rohrkörpern. Die für die Druckprüfung erforderliche Prüfvorrichtung ist sehr aufwendig und auf die Prüfung von Geschützrohren spezialisiert.

Eine Vorrichtung zum Prüfen von Rohren, insbesondere Waffenrohren ist in der DE 2700600 Al offenbart. Mit dieser Vorrichtung wird die Druckfestigkeit, die Dehnung, die Erwärmung und der Errosionsgrad des Prüflings bestimmt. Eine Ermittlung der Zähigkeit und eine Untersuchung des Bruchverhaltens ist nicht vorgesehen. Die dynmische Beaufschlagung der Rohrprüflinge erfolgt mittels Treibladungsgas, Hydropulser oder Sprengladung, was entsprechende Vorrichtungen zur Voraussetzung hat. Die Endbereiche des Rohrprüflings werden mittels Aufnehmern und Hülsen kraftschlüssig und abdichtend eingespannt.

In der DE 38 27 080 A1 ist ein Verfahren und eine Vorrichtung zur dynamischen Innendruckprüfung von Hohlkörpern, insbesondere Geschützrohren offenbart. Bei diesem Verfahren wird mittels eines eine Öffnung des zu prüfenden Hohlkörpers verschließender Kolben, ein der zu erwartenden Beanspruchung relevanter, dynamischer Druckverlauf erzeugt und die dabei auftretenden Spannungen, insbesondere die Dehnungen gemessen. Der mit einem Kolben verschließbare Hohlkörper wird gemeinsam mit einem mit dem Hohlkörper in Stoßrichtung zusammenwirkenden elastischen Zwischenglied durch zwei sich stoßende Massen belastet. Das bekannte Verfahren sowie diese offenbarte Vorrichtung sind für einen Berstversuch nicht geeignet. Außerdem ist die Prüfanlage apparativ aufwendig gestaltet und kann nicht überall aufgestellt werden.

Aufgabe der Erfindung ist es, ein Verfahren zum Prüfen eines Hohlkörperabschnittes anzugeben, das insbesondere für Serienteile mit einer einfachen Vorrichtung kostengünstig und schnell durchführbar ist und das wirklichkeitsnahe Ergebnisse bei der Simulation dynamischer Innendruckbelastung liefert.

Diese Aufgabe wird mit den Merkmalen des Hauptanspruches gelöst. Vorteilhafte Weiterbildungen sowie eine Prüfanlage zur Durchführung des Verfahrens sind Bestandteil von Unteransprüchen.

Der Vorteil des erfindungsgemäßen Verfahrens ist darin zu sehen, daß kostenintensive Prüfkörpervorbereitungen wie z. B. das Zuschweißen der offenen Enden des Hohlkörperabschnittes entfallen und in einfacher Weise auch Serienprüfungen durchgeführt werden können. Von weiterem Vorteil ist, daß durch das erfindungsgemäße Verfahren wirklichkeitsnähere Ergebnisse bei der Simulation dynamischer Innendruckbelastung geliefert werden im Vergleich zur bekannten konventionellen Prüfung.

Im Regelfall wird als Fluid eine nahezu inkompressible Flüssigkeit wie z. B. Öl oder Alkohol verwendet. Unter Beachtung der Sicherheitsvorschriften kann aber auch ein Gas, z. B. Luft, eingesetzt werden. Die vertikale Anordnung der Prüfanlage unter Ausnutzung der Schwerkraft für das Fallgewicht hat sich als vorteilhaft herausgestellt. Es ist aber ebenso denkbar, die Prüfanlage horizontal anzuordnen und statt eines Fallgewichtes ein verfahrbares Gewicht zu verwenden. Das Gewicht könnte z. B. über eine gespannte Feder entsprechend beschleunigt werden. Die Anlage eines verschiebbaren Kolbens gegen ein Widerlager hat praktische Vorteile. Grundsätzlich können beide Kolben bewegt werden, beispielsweise durch das Draufschlagen zweier getrennter Gewichte.

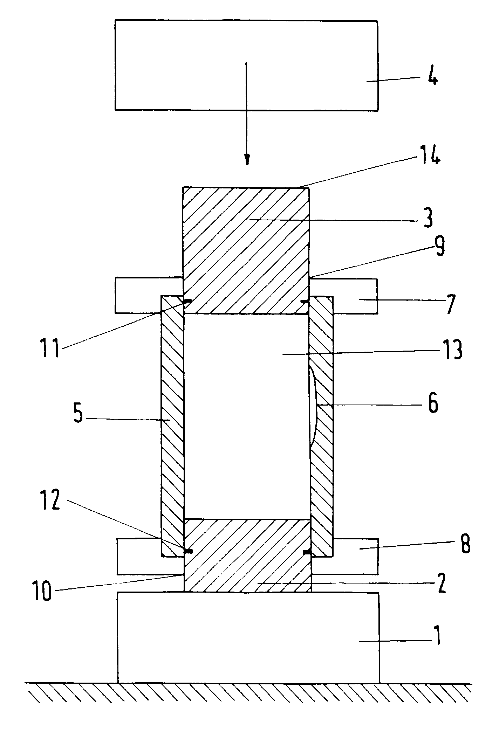

In der einzigen Figur wird anhand eines Ausführungsbeispieles das erfindungsgemäße Verfahren näher erläutert.

Die Figur zeigt schematisch in einem Längsschnitt die wesentlichen Elemente der erfindungsgemäßen Prüfanlage. Sie besteht aus einem Widerlager 1, sowie einem auf dem Widerlager 1 aufstehenden, im Hohlkörperabschnitt 5 beweglichen Kolben 2. Gegenüberliegend im Abstand dazu befindet sich ein weiterer beweglicher Kolben 3, der in diesem Ausführungsbeispiel durch ein Fallgewicht 4 beaufschlagt wird. Die Einzelheiten der Aufhängung und Führung des Fallgewichtes 4 sind hier weggelassen worden, da sie nicht erfindungswesentlich sind. Der zu prüfende Hohlkörperabschnitt 5, kann eine vor der Prüfung angebrachte Sollbruchstelle z. B. in Form einer Kerbe 6 aufweisen. Die Enden des Hohlkörperabschnittes 5 werden umgreifend gestützt durch je einen Stützring 7,8. Die Anordnung der beiden Stützringe 7,8 hat die Aufgabe eine vorzeitige Aufweitung des Hohlkörperabschnittes 5 an den Enden und einen damit verbundenen Druckabfall zu verhindern. Die beiden Kolben 2,3 erstrecken sich durch Öffnungen 9,10 des jeweiligen Stützringes 7,8 und werden im Hohlkörperabschnitt 5 durch je eine Dichtung 11,12 abgedichtet. Der Innenraum des Hohlkörperabschnittes 5 ist mit einem Fluid 13, z. B. Öl, gefüllt.

Das Prüfverfahren läuft wie nachfolgend beschrieben ab. Der zu prüfende Hohlkörper 5 wird an den beiden Stirnflächen planparallel bearbeitet, damit die Stützringe 7,8 zur Anlage kommen. Je nach Anforderung wird zudem an der Innenwand des Hohlkörperabschnittes 5 eine Sollbruchstelle beispielsweise in Form einer Kerbe 6 angebracht.

Danach wird zuerst der untere Kolben 2 mit Dichtring 12 in den Hohlkörperabschnitt 5 eingelegt und der untere Stützring 8 aufgeschoben. Anschließend erfolgt die Füllung des Innenraumes des Hohlkörperabschnittes 5 mit einem Fluid 13 zur Druckübertragung, beispielsweise Öl oder Alkohol. Danach wird der obere Kolben 3 mit Dichtring 11 in den Hohlkörperabschnitt 5 eingeführt und der obere Stützring 7 aufgeschoben und der so vorbereitete Prüfkörper 5 auf dem Widerlager 1 positioniert. Nach Freigabe einer Sperre fällt das in einer hier nicht näher dargestellten Anlage geführte Fallgewicht 4 auf die obere Stirnfläche 14 des oberen Kolbens 3. Die Schlagenergie wird so bemessen, daß es durch schlagartige Innendrucksteigerung im Hohlkörperabschnitt 5 zum Bersten des Hohlkörperabschnittes 5 kommt, bzw. eine vorgegebene Belastung erreicht wird.

Nach der Demontage, d. h. dem Entfernen der Kolben 2, 3 mit den Dichtungen 11, 12, der Stützringe 7, 8 und des im Hohlkörperabschnitt 5 verbliebenen Fluids 13 kann im Fall des Berstens die maximale Umfangsdehnung im Versagensbereich bestimmt und das Bruchflächenaussehen bewertet werden.

## Patentansprüche

1. Verfahren zum Prüfen eines Hohlkörperabschnittes (5), bei dem zum Nachweis der Sprödbruchsicherheit nach Füllung des Abschnittes mit einer Flüssigkeit unter schlagartigem Druckaufbau dieser einem Berstversuch unterworfen wird,
dadurch gekennzeichnet,
daß nach Verschließen der Öffnung der offenen Enden durch eine dynamische Verschiebung zweier durch die Öffnung der offenen Enden abgedichtet hindurchgreifender Elemente (2,3) zueinander der erforderliche Berstdruck aufgebracht wird und vor der Druckbeaufschlagung die Enden des Hohlkörperabschnittes (5) umgreifend von außen abgestützt (7,8) werden.

2. Verfahren nach Anspruch 1,
dadurch gekennzeichnet,
daß der Hohlkörperabschnitt vor der Prüfung mit einer Sollbruchstelle versehen wird.

3. Prüfanlage zur Durchführung des Verfahrens nach Anspruch 1 mit einem heb- und senkbaren Fallgewicht (4) und einem die dem Fallgewicht (4) zugewandte Öffnung des mit einer Flüssigkeit füllbaren Hohlkörperabschnittes (5) verschließenden und eine Dichtung (11) aufweisenden Kolben (3),
dadurch gekennzeichnet,
daß das andere offene Ende mit einem die Öffnung verschließenden eine Dichtung (12) aufweisenden Kolben (2) versehen ist, der auf einem stationären Widerlager (1) zur Anlage kommt und das freie Ende des dem Fallgewicht (4) zugewandten Kolbens (3) direkt vom Fallgewicht (4) beaufschlagbar ist und auf beiden Endbereichen des Hohlkörperabschnittes (5) umgreifende Stützringe (7,8) zur Anlage kommen.

## Claims

1. A method for testing a hollow body section (5), in which to demonstrate the resistance to brittle fracture the section is subjected to a bursting test with a sudden pressure buildup once said section has been filled with a liquid, characterised in that once the opening of the open ends has been closed by dynamic displacement relative to each other of two elements (2, 3) which extend hermetically through the opening of the open ends the required bursting pressure is applied and before the application of pressure the ends of the hollow body section (5) are supported (7, 8) circumambiently from the outside.

2. A method according to Claim 1, characterised in that the hollow body section is provided with a predetermined breaking point before testing.

3. A testing installation for performing the method according to Claim 1, with a drop weight (4) which can be raised and lowered and a piston (3) bearing a seal (11) and closing the opening, facing the drop weight (4), in the hollow body section (5) which can be filled with a liquid,
characterised in that
the other open end is provided with a piston (2) having a seal (12) closing the opening, which piston comes to rest on a stationary counter-surface (1) and the free end of the piston (3) facing the drop weight (4) can be acted upon directly by the drop weight (4) and supporting rings (7, 8) come to bear circumambiently around both end regions of the hollow body section (5).

## Revendications

1. Procédé pour examiner un tronçon de corps creux (5), dans lequel, pour indiquer la sécurité à la rupture de fragilité après remplissage du tronçon par un liquide sous une montée en pression par à-coups, celui-ci est soumis à un test d'éclatement,
caractérisé en ce que, après fermeture de l'ouverture des extrémités ouvertes, la pression d'éclatement nécessaire est appliquée par un déplacement dynamique de deux éléments (2,3) traversant, de façon étanche, l'ouverture des extrémités ouvertes l'un par rapport à l'autre et, avant la sollicitation en pression, les extrémités du troncon de corps creux (5) sont appuyées (7,8) de l'extérieur en les entourant.

2. Procédé selon la revendication 1,
caractérisée en ce que le tronçon de corps creux est muni, avant l'examen, d'un point destiné à la rupture.

3. Installation pour la mise en oeuvre du procédé selon la revendication 1, comportant une masse tombante (4) pouvant être soulevée et abaissée et un piston (3) présentant un joint étanche (11) et fermant l'ouverture, en regard de la masse tombante (4), du tronçon de corps creux (5) pouvant être rempli par un liquide,
caractérisée en ce que l'autre extrémité ouverte est munie d'un piston (2) présentant un joint étanche (12) fermant l'ouverture, qui vient en appui sur une butée fixe (1), et l'extrémité libre du piston (3) en regard de la masse tombante (4) peut être sollicitée directement par la masse tombante (4), et des bagues d'appui (7,8) enveloppantes viennent en appui sur les deux zones d'extrémité du troncon de corps creux (5).
